# NEW EUROPEAN PATENT SPECIFICATION

(11) **EP 0 294 233 B2**
(45) Date of publication and mention of the opposition decision: **13.08.1997**
(45) Mention of the grant of the patent: 07.01.1993
(21) Application number: 88305113.8
(22) Date of filing: 03.06.1988
(51) Int. Cl.: H04M 1/72

(54) **Cordless telephone apparatus and a method of controlling same**
Schnurloser Telefonapparat und Steuerungsverfahren dafür
Appareil téléphonique sans fil et méthode pour sa commande

(30) Priority: 03.06.1987 JP 139455/87
(43) Date of publication of application: 07.12.1988
(73) Proprietor: NIPPON TELEGRAPH AND TELEPHONE CORPORATION, Tokyo (JP); NEC CORPORATION, Tokyo (JP); KABUSHIKI KAISHA TOSHIBA, Kawasaki-shi, Kanagawa-ken 210 (JP)
(72) Inventor: Murata, Yoshitoshi, Yokohama-shi Kanagawa-ken (JP); Ohta, Yuji, Suita-shi Osaka (JP); Yotsutani, Akio, Minato-ku Tokyo (JP); Hara, Toshihiro, Minato-ku Tokyo (JP); Ono, Koji No. 605, Hachioji-Hazama-Jutaku, Hachioji-shi Tokyo (JP); Fuse, Shoji, Hachioji-shi Tokyo (JP)
(74) Representative: Freed, Arthur Woolf

(56) References cited:
- EP-A- 0 213 929
- DE-A- 2 937 112
- DE-A- 3 514 651
- GB-A- 2 166 622
- PATENT ABSTRACTS OF JAPAN, vol. 4, no. 24 (E-173), 29th February 1980, page 128 E 173; & JP-A-54 162 905
- PATENT ABSTRACTS OF JAPAN, vol. 10, no. 79 (E-391)[2136], 28th March 1986; & JP-A-60 224 338
- "System HICOM 600", Produktschrift der Siemens AG; Bestell-Nr. A19100-K3161-G430-01; Publ. 01/85, pages 26-38
- "ISDN im Büro - HICOM", Sonderausgabe telcom report und Siemens-Magazin COM: Siemens AG, Berlin und München, 1985; pages 14-16
- Philips Telecommunication Review, Vol. 40, No. 4, Dec. 1982: "KBX, a Key Branch Exchange", M.E. Dennis, TMC/PBS Malmesbury; pages 273-281
- Philips TDS Review, Vol. 44, No. 3, Dec. 1986: "Call processing in a fully integrated network of SOPHO-S2500 PABXs"; J. Ph. Maat, pages 32-45

## Description

The present invention relates to cordless telephone apparatuses comprising a single base unit and a plurality of radio telephone sets which are coupled by a radio circuit and methods of controlling same and, more particularly, to apparatuses and methods of controlling same, which, in accordance with a request of transfer from a radio telephone set in conversation via an outside line, is adapted to transfer the telephone talk to another radio telephone set.

A cordless telephone apparatus is proposed which comprises a single base unit and a plurality of radio telephone sets connected via a radio circuit to the base unit and the base unit functions to switchingly connect a subscriber line, connected to the base unit, to any one of the radio telephone sets.

In the cordless telephone apparatus having such structure, when a radio telephone set in conversation with an outside line via the subscriber line transfers the telephone communication to another radio telephone set, the following structure could be conceived.

In order to keep the outside line DC (Direct Current) loop closed, the radio telephone set which transfers the telephone talk (hereinafter referred to as the transferring telephone set) first performs predetermined hold operations. Thus the base unit holds the outside line DC loop closed and sends a predetermined melody signal or the like indicative of that fact to the partner subscriber at the other end of the outside line.

Subsequently, the transferring telephone set dials the extension number of a radio telephone set to which the talk is to be transferred (hereinafter referred to as a receiving telephone set) and then goes on-hook to end the talk of the transferring telephone set with the partner subscriber.

When the base unit receives a signal indicative of the dial number of a receiving telephone set from the transferring telephone set, it establishes a radio circuit between the base unit and receiving telephone set and sends a ringing signal to the receiving telephone set.

A bell rings at the receiving telephone set in response to the ringing signal. When the receiving telephone set goes off-hook in response to the bell ringing, the base unit stops sending the ringing signal and establishes a communication channel between the receiving telephone set and the subscriber line. Thus the transfer ends and the receiving telephone set can talk with the partner subscriber at the other end of the outside line.

However, a person is not always at the receiving telephone set. It is assumed that the user at the telephone set transfers the telephone talk to the receiving telephone set without knowing that no one is at the receiving telephone set. In that case, no one responds to the ringing tone generated by the receiving telephone set due to the bell ringing signal from the base unit and the outside line partner is awaited held so long as the ringing tone continues to ring. On the other hand, the operator at the transferring telephone set cannot at all know how the result of the transfer is because the transferring telephone set has already moved to its standby state. Therefore, there is the problem that each time transfer occurs, it is necessary to go and see whether anybody is at the receiving telephone set and whether normal transfer has been achieved.

If there is no one at the receiving telephone set even if a ringing tone is generated, there is the problem that the telephone talk cannot be retransferred to the transferring telephone set.

These problems derive from the use of only one pair of radio circuits. In order to solve these problems, an additional pair of transmitter and receiver and two radio circuits would be able to be provided. However, the cost would increase greatly and the size of the base unit would also increase undesirably.

In the Siemens AG System HICOM 600 wired telephone system, the transferring party remains on-line during a call transfer operation, or the system can be programmed to call back the transferrer if the transferring party goes off line and the receiving party does not answer the call.

The Philips TDS Review Vol 44, No. 3, Dec. 1986, "Call Processing in a Fully Integrated Network of SOPHO-S2500 PABX's", describes a wired system in which the transferring party remains on-line to hear the ringing tone generated at the receiving set.

DE-A-3514651 (GB-A-2159373) describes a cordless telephone system in which calls are transferred between a radio telephone set and a wired telephone set at the base unit, and the transferring party remains on-line during the call transfer operation.

GB-A-2166622 suggests programming a control unit to send an incoming call to another extension if there is no reply from the required extension or to give an alarm if there is no reply from an extension.

It is an object of the present invention to a cordless telephone apparatus and a method of controlling same which eliminate the problems set forth above, and are capable of ascertaining the transferred state and retransfer to the transferring telephone set.

In order to achieve the above object, the present invention provides a cordless telephone apparatus including a base unit connected to a subscriber line, a plurality of radio telephone sets connectable via a radio circuit with the base unit, and means arranged to form an outside line communication channel for any particular one of the telephone sets via the subscriber line by establishing a radio circuit between the base unit and the particular one of the radio telephone set, the radio circuit including a control channel and a communication channel, characterised in that there are provided:
means arranged to hold a telephone communication via the subscriber line in accordance with a request for hold from a transferring radio telephone set in telephone communication via the outside line and to generate from the transferring telephone set to the base unit a request for transfer to a receiving radio telephone set and to place the transferring telephone set on standby after generation of the request for transfer;
means arranged to respond to the request for transfer to establish a radio circuit among the base unit, and the transferring and receiving telephone sets and to deliver over the control channel a ringing signal from the base unit to the receiving and transferring telephone sets simultaneously; and
means arranged to release the hold of the telephone communication via the outside line, to stop the generation of the ringing signal, and to form an outside line communication channel via the subscriber line to the receiving telephone set when the receiving telephone set responds to the ringing signal, the release means also being arranged to release the hold of the telephone communication via the outside line, to stop the generation of the ringing signal and to again form the outside line communication channel via the subscriber line to the transferring telephone set when the transferring telephone set responds to the ringing signal.

The present invention also provides a method of controlling a cordless telephone apparatus including a base unit connected to a subscriber line and a plurality of radio telephone sets connectable to the base unit via a radio circuit, the radio circuit including a control channel and a communication channel, characterised by the steps of:
operating the transferring radio telephone set to generate a request from the transferring radio telephone set to the base unit to hold an outside line through which a transferring radio telephone set of the plurality of radio telephone sets is in telephone communication via the subscriber line and to transfer to a receiving radio telephone set from the transferring radio telephone set;
placing the transferring radio telephone set on standby after generation of the request for transfer, holding the outside line communication via the subscriber line at the base unit in response to the request to hold and sending over the control channel a ringing signal from the base unit to the transferring and receiving radio telephone sets simultaneously in response to the request to transfer;
and releasing the hold of the outside line communication via the subscriber line and forming an outside line communication channel via the subscriber line to the receiving telephone set if the receiving telephone set responds to the ringing signal; and releasing the hold of the outside line communication via the subscriber line, and again forming the outside line communication channel to the transferring telephone set if the transferring telephone set responds to the ringing signal.

With the apparatus and method of the present invention, when the base unit calls the receiving telephone set, it also calls the transferring telephone set. Thus the user at the transferring telephone set can hear the ringing tone and notice that calling is being performed for transferring purposes. When the ringing tone does not stop for long, he also recognizes that no one is at the receiving telephone set. At that time, if the user at the transferring telephone responds using same, he can inform the outside line partner subscriber that nobody is at the receiving telephone set.

Fig. 1 is a block diagram showing a general structure of a cordless telephone apparatus according to one embodiment of the present invention.

Fig. 2 is a diagram of control sequence performed on the occurrence of a call from a radio telephone set in the embodiment.

Fig. 3 is a diagram of control sequence performed on the occurrence of an incoming call at the radio telephone set in the embodiment.

Fig. 4 is a diagram of control sequence involving hold and transfer in the embodiment.

Fig. 5 is a diagram of control sequence involving hold, transfer and retransfer in the embodiment.

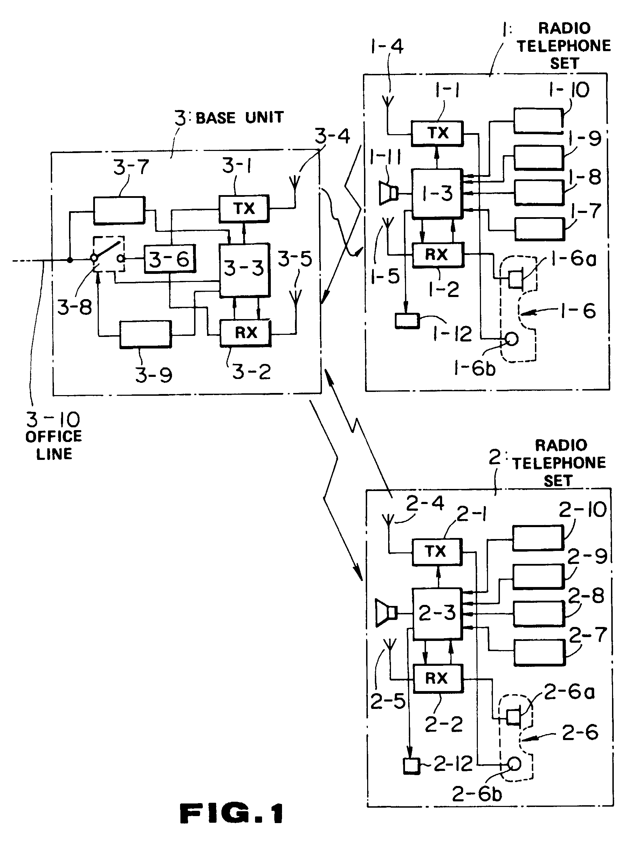

In Fig. 1, reference numerals 1 and 2 denote radio telephone sets which include transmitters 1-1, 2-1; receivers 1-2, 2-2; control units 1-3, 2-3; transmission antennas 1-4, 2-4; reception antennas 1-5, 2-5; handsets 1-6, 2-6 including telephone receivers 1-6a, 2-6a and telephone transmitters 1-6b, 2-6b; hook switches 1-7, 2-7; dial keys 1-8, 2-8; hold keys 1-9, 2-9; extension keys 1-10, 2-10; and speakers 1-11, 2-11, respectively. Reference numeral 3 denotes a base unit which includes a transmitter 3-1, a receiver 3-2, a control unit 3-3, a transmission antenna 3-4, a reception antenna 3-5, a 2-wire to 4-wire converter 3-6, a ringing signal detector 3-7, a line relay 3-8, and a hold circuit 3-9. The converter 3-6 is connected via the line relay 3-8 to a main or office line 3-10.

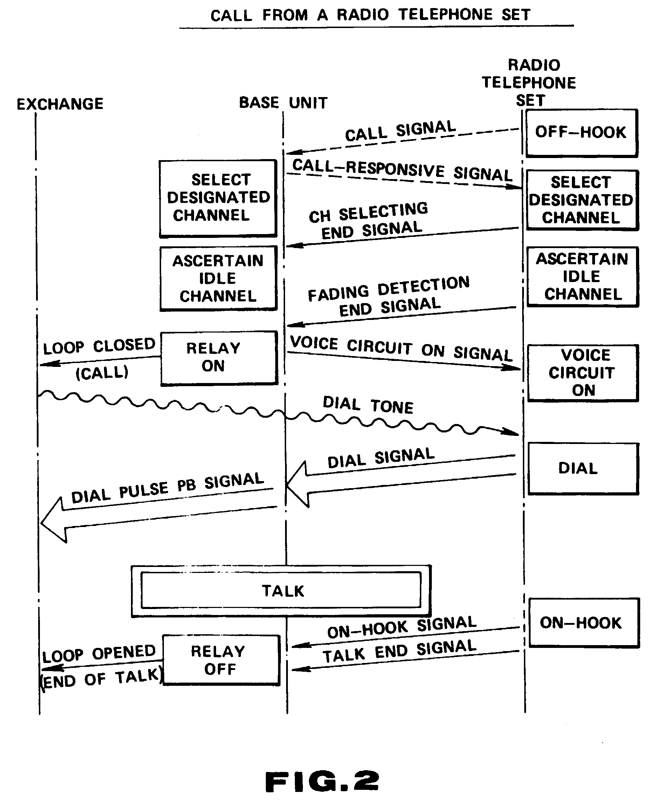

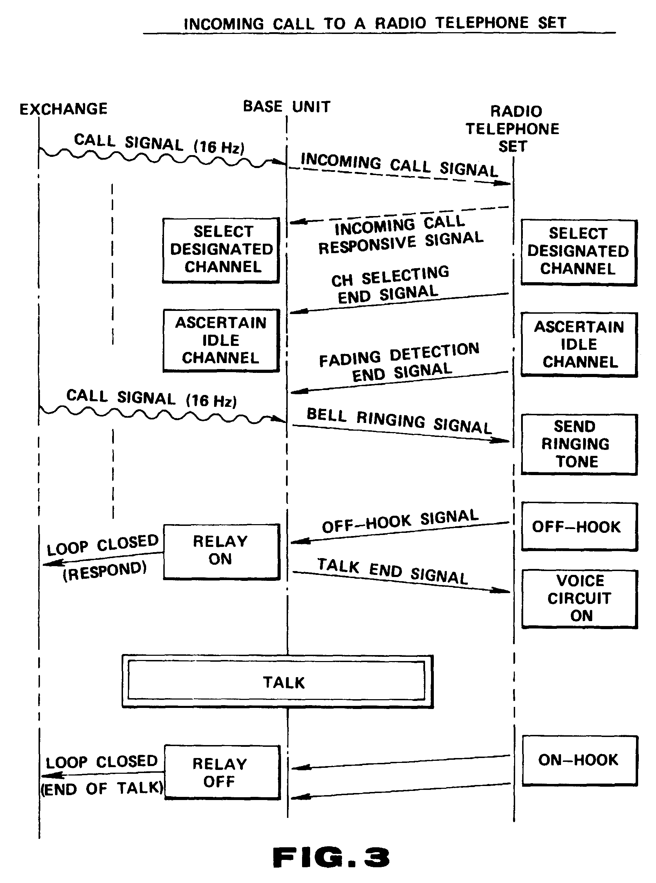

The basic control operation of this embodiment will now be described with reference to the sequence diagram of Figs. 2 and 3.

### (a). When a radio telephone set 1 issues a call

If the operator at the radio telephone set 1 causes the hand set 1-6 to go off-hook in order to issue a call, the state of the hook switch 1-7 changes and this information is transmitted to the control unit 1-3. The control unit 1-3 drives the transmitter 1-1 and transmits a call signal including an identification code inherent to the radio telephone 1 via the antenna 1-4 using an electromagnetic wave in the control channel.

When the base unit 3 receives the identification code of the radio telephone set in the system via the antenna 3-5 and the receiver 3-2, it transmits a call-responsive signal including a channel designating code which designates an idle communication channel and an identification code, as the electromagnetic waves in the control channel via the transmitter 3-1 and antenna 3-4. When the radio telephone set 1 receives that electromagnetic waves via the antenna 1-5 and receiver 1-2, it selects and sets the designated communication channel. It further ascertains whether the selected channel is idle and transmits a channel selection end signal to the base unit.

The base units 3 also ascertain whether its communication channel is idle. The radio telephone set 1 ascertains whether there is any fading occurring in the communication channel. If not, the radio telephone set transmits a fading detection end signal to the base unit 3. When the base unit 3 receives the fading detection end signal, it shifts to the next operation by determining that a radio circuit is established between the base unit and the telephone set 1.

The base unit closes its line relay 3-8, forms a closed direct-current loop with the exchange, simultaneously transmits a voice circuit on signal to the radio telephone set 1, and drives a voice circuit composed of the telephone transmitter 1-6a and receiver 1-6b in the handset 1-6 of the radio telephone set 1.

A dial tone signal delivered by the exchange via a closed direct-current loop including the office line 3-10 is modulated by the base unit 3 and output as a sound from the telephone receiver 1-6a in the handset 1-6 of the radio telephone set 1.

Then, by dialing a predetermined dial number at the radio telephone set 1 using dial keys 1-8, the dialed number signal is delivered to the exchange via the radio circuit and base unit. When the dial signal transmission ends, the exchange performs an exchanging operation and calls a desired partner subscriber. Thus if the partner responds, telephone communication is possible.

When the communication is to be ended, the handset 1-6 of the radio telephone set 1 is caused to go on-hook. The control unit 1-3 detects and determines that the hook switch 1-7 has changed its state, and delivers an on-hook signal to the base unit 3. The control unit 1-3 delivers a talk end signal to the base unit 3 a predetermined time after the on-hook signal has been delivered. When the base unit 3 receives the talk end signal, it opens the the line relay 3-8 to thereby release the office line.

### (b). When there is an incoming call from an outside line

When there is an incoming call at the system on standby from the office line, the ringing signal detector 3-7 of the base unit 3 detects a ringing signal delivered by the exchange, and transmits to the radio telephone sets 1 and/or 2 via the control channel an incoming call signal including the number of a communication channel detected as being idle and stored by the system on standby and the respective identification codes of the radio telephone sets.

When the radio telephone sets 1 and 2 receive that signal via the control channels, they select and set the designated channels of the receivers 1-2, 2-2 and checks to see if the designated channels are idle. If the channels are idle, the radio telephone sets 1, 2 send to the base unit 3 a "channel selecting end" signal. On the other hand, the base units 3 also selects and sets its designated communication channel and checks to see if the selected channel is idle. When the base unit receives a fading detection end signal from the telephone sets 1 and 2, it determines that a radio circuit is established, and sends out a bell ringing signal to the radio telephone sets 1 and/or 2 in order to deliver a ringing signal to the radio sets 1 and 2.

When the radio telephone sets 1, 2 receives the bell ringing signal, they generate a ringing tone from the speakers 1-11, 2-11 to thereby inform the users of the receipt of an incoming call from the office line.

When the user of the radio telephone set 1 responds to the ringing and causes the handset 1-6 to go off-hook, the hook switch 1-7 changes its state. The control unit 1-3 detects this change and transmits an off-hook signal to the base unit 3.

When the base unit 3 receives that off-hook signal, it closes the line relay 3-8 and forms a closed direct-current loop between the exchange and the base unit 3. At the same time, the base unit 3 delivers a voice circuit on signal to the radio telephone set 1. When the radio telephone set 1 receives the signal, it turns on a voice circuit including the telephone transmitter 1-6b and receiver 1-6a of the handset 1-6 to thereby enable conversation. The conversation ending operation is the same as that performed "when the radio telephone set 1 issues a call".

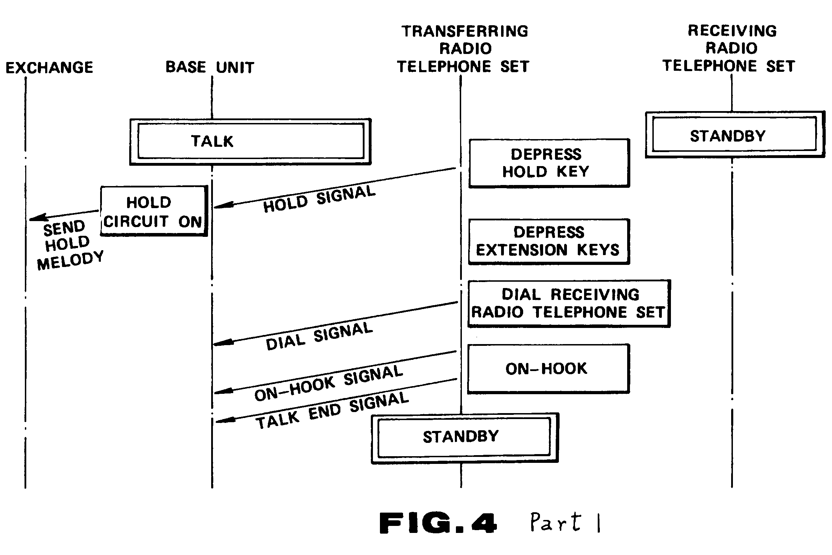

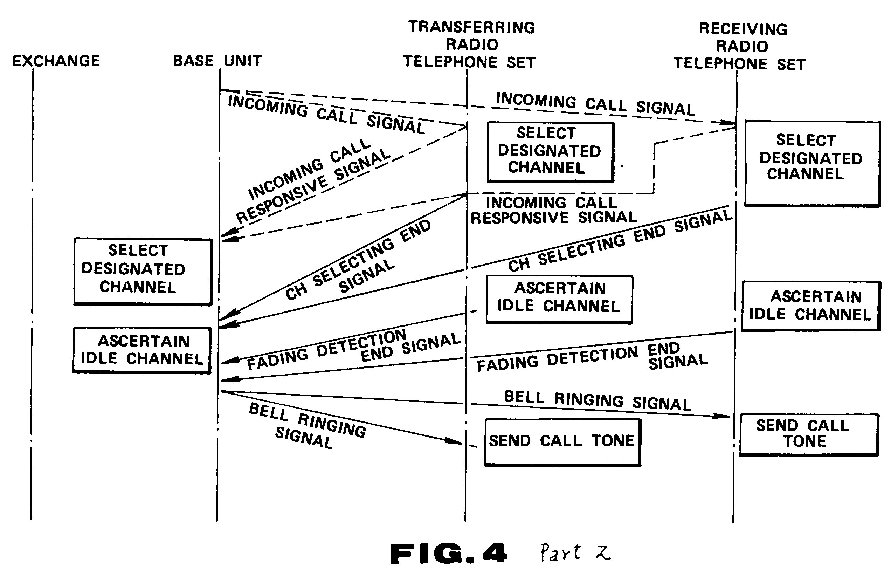

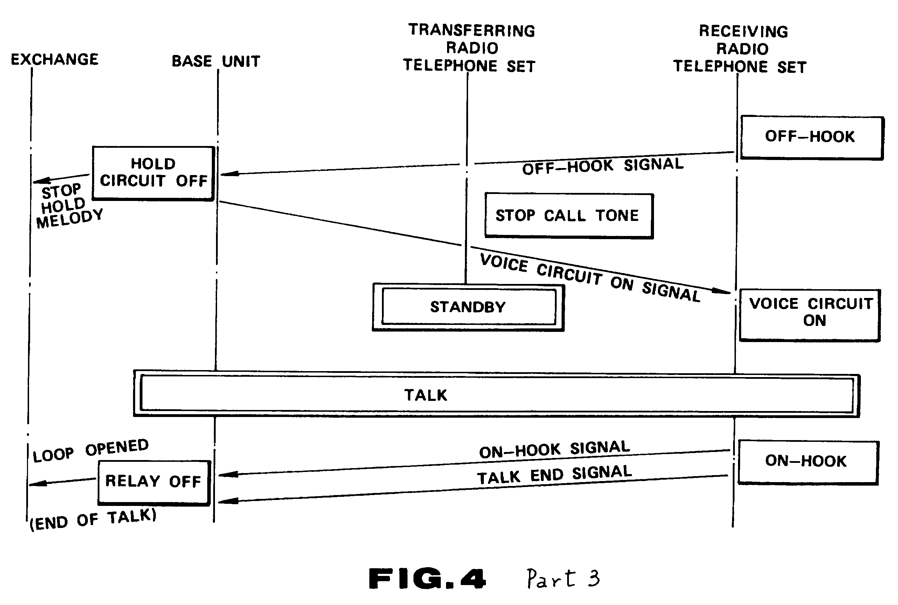

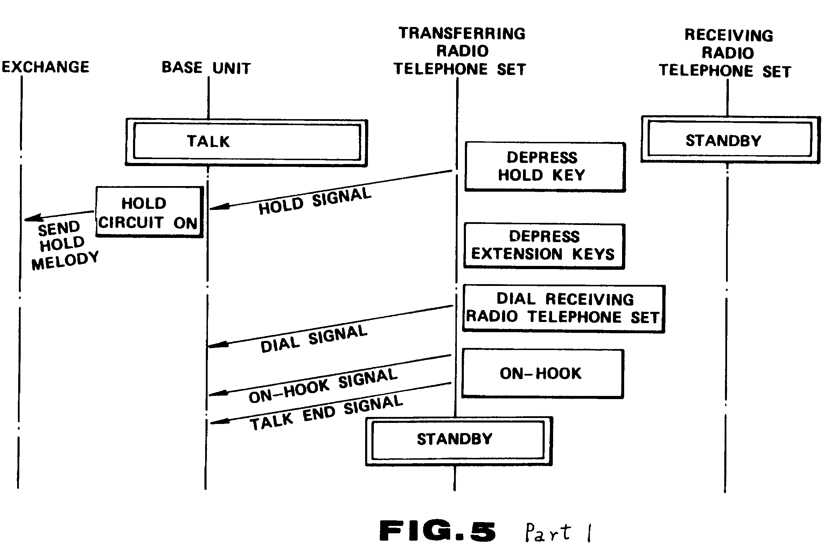

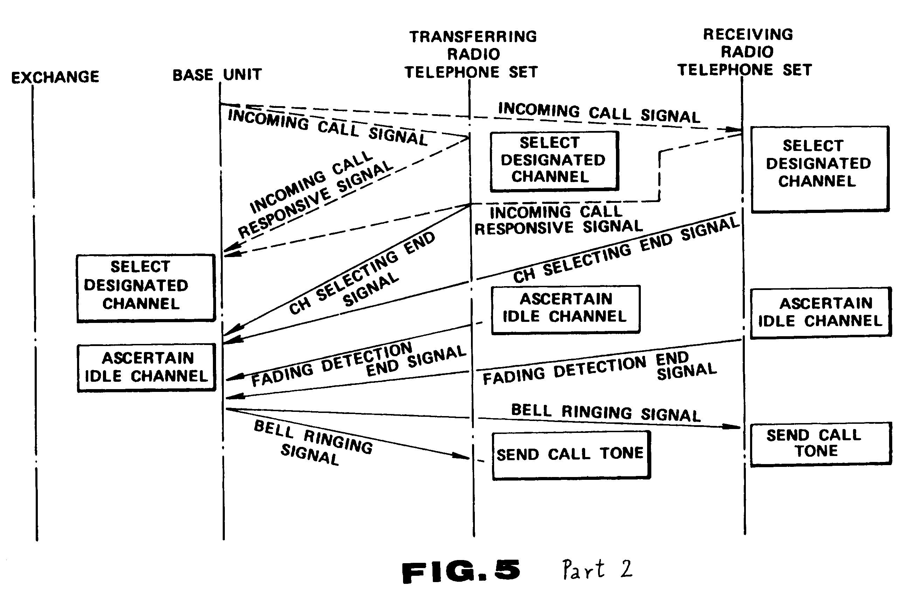

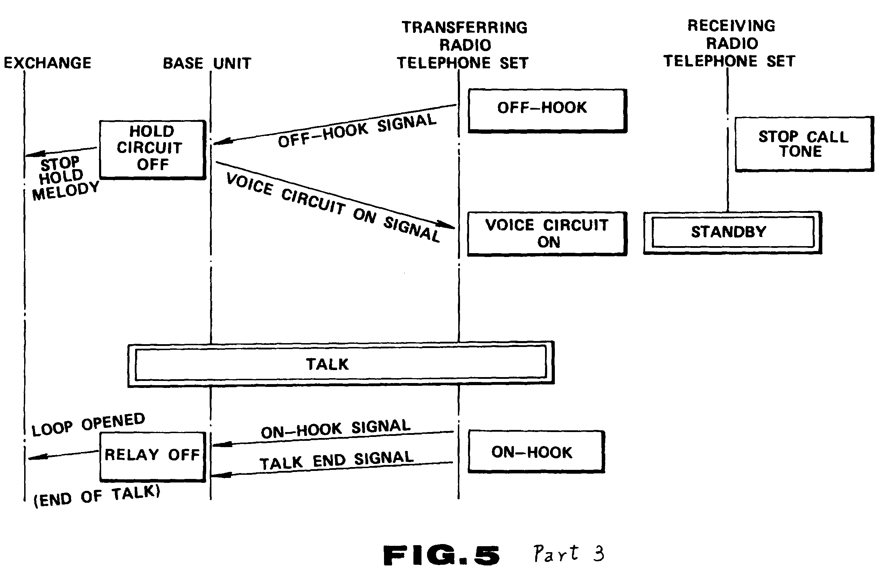

While the foregoing relates to the basic control operation of the system, the transfer control operation essential for the present invention will now be described with reference to the sequence diagrams of Figs. 4 and 5.

Fig. 4 involves the operation performed when the receiving telephone set 2 responds to the transfer of the incoming call, and Fig. 5 involves the operation performed when there is no operator available at the receiving telephone set, the transferred call is not responded, and the operator at the transferring telephone set 1 has responded to the call.

Figs. 4 and 5 show the sequences after the telephone communication has been established because the function of transfer is used in that stage.

First, the control sequence of Fig. 4 will be described in detail. It is assumed that the radio telephone set 1 is in telephone conversation with the outside-line subscriber via the base unit 3. When the operator at the telephone set 1 transfers the outside line now under communication to the user at the telephone set 2, the user at the telephone set 1 presses the hold key 1-9 temporarily in order to keep closed the outside direct-current loop now under communication. In response to this, a hold signal is delivered from the radio telephone set 1 to the base unit 3 via the radio circuit. When the base unit 3 receives the hold signal, it turns on the hold circuit 3-9 in order to keep closed the outside line direct-current loop. At the time, a melody signal indicative of the establishment of the hold state is delivered to the partner subscriber at the other end of the office line. The user at the radio telephone set 1 presses the extension keys 1-10 to set an extension line and dials the extension numbers of the radio telephone set 2 to which the incoming call is to be transferred, and the handset is then caused to go on-hook to thereby result in communication end by the telephone set 1. On the other hand, the base unit 3 sequentially receives the dial signal, on-hook signal and talk end signal from the radio telephone set 1, stops the transmission of the electromagnetic waves via the communication channel used so far, and releases that channel.

The base unit 3 uses via the control channel an incoming call signal including the respective identification codes of the receiving and tranferring telephone sets 2 and 1 and channel designating codes. When the radio telephone sets 1 and 2 receive that signal, they transmit an incoming call responsive signal to the base unit 3 and select and set the respective channels of the receivers 1-2 and 2-2 such that they can receive the designated communication channels. When the radio telephone sets 1 and 2 have completed the channel setting, they transmit a channel selecting end signal to the base unit 3. The radio telephone sets 1 and 2 ascertain that the designated communication channels are idle and transmit a fading detection end signal to the base unit 3 which then moves to the communication channel designated by itself and ascertains that that channel is idle, and forms radio channels for receiving the signals transmitted by the radio telephone sets 1 and 2 for transmission of any required matter.

The base unit 3 then delivers a bell ringing signal to the radio telephone sets 1 and 2. When the radio telephone sets 1 and 2 receives that bell ringing signal, they generate a ringing tone. The user at the radio telephone set 2 who has heard the ringing tone at that time would consider that he must respond because he is being called via the extension line while the user at the telephone set 1 would consider that the ringing tone is one which calls the telephone set 2 due to his transfer operation.

When the user at the telephone set 2 responds by causing the handset to go off-hook, an off-hook signal is delivered from the radio telephone set 2 to the base unit 3. When the base unit 3 receives that off-hook signal, it stops the bell ringing signal generated so far, turns off the hold circuit 3-9, releases the held state of the office line kept so far, stops the transmission of the hold melody signal to the partner subscriber, and results in a communication enable state. When the radio telephone sets 1 and 2 stop the generation of the ringing tone by recognizing the stoppage of transmission of the bell ringing signal. The user at the radio telephone set 1 recognizes that the user at the radio telephone set 2 has responded, by the stoppage of the ringing tone from the radio telephone set 1, and also recognizes that the outside line is reliably transferred to the radio telephone set 2.

On the other hand, the radio telephone set 2 which has caused the handset to go off-hook receives a voice circuit on signal from the base unit to thereby enable communication with the partner subscriber at the other end of the outside line.

The ending of the talk is similar to that in Figs. 2 and 3.

Retransfer of the incoming call when no one is at the receiving telephone set will now be described with reference to Fig. 5.

Since the sequence in which after the transfer operation has been made at the radio telephone set 1, the base unit 3 calls the radio telephone sets 1 and 2 is the same as that in Fig. 4, further description thereon will be omitted. The user at the receiving telephone set 1 hears a ringing tone at the radio telephone set 1, knows that a call is being made for transferring purposes, but determines that the user at the radio telephone set 2 is absent because the ringing tone does not stop at all, and responds by taking up the handset 1-6 of the radio telephone set 1. By this off-hook operation, an off-hook signal is delivered from the radio telephone set 1 to the base unit 3. When the base unit 3 receives that signal, it stops the bell ringing signal, turns off the hold circuit 3-9, stops the transmission of the hold melody signal, and delivers a voice circuit on signal to the radio telephone set 1. By the stoppage of the bell ringing signal, the telephone set 1 stops the generation of the ringing tone, and turns on the voice communication circuit by reception of the voice circuit on signal.

Thus, since the outside line which is intended to be transferred to the radio telephone set 2 is retransferred to the radio telephone set 1, the system can inform the partner subscriber that the operator at the radio telephone set 2 is absent.

While in the above embodiment the transforming telephone set 1 is also constructed so as to generate a ringing tone as in the transferring telephone set 2, the transferring telephone set may be constructed so as to generate a ringing tone different in sounding aspects such as tone color and period from the receiving telephone set.

The transferring telephone set may be constructed so as to inform the user at the receiving telephone set that the incoming call is being transferred, by turning on and/or off the lamp 1-2 or 2-12 of Fig. 1 instead of the ringing tone being generated.

In that case, the base unit may deliver a ringing signal accompanied by a signal indicative of a receiving telephone set and/or a transferring telephone set. The transferring telephone set may store what it has transferred and may change the manner in which the transferring telephone set reports the incoming call; for example, by turning on and/or off a lamp, or ringing a bell, on the basis of the stored contents.

As just described above, the transferring telephone set is also called when the receiving telephone set is to be called, so that the user at the transferring telephone set can very easily ascertain the transferred state and can respond to the outside line by retransferring the incoming call to the transferring telephone set when the user at the receiving telephone is absent.

## Claims

1. A cordless telephone apparatus including a base unit (3) connected to a subscriber line (3-10), a plurality of radio telephone sets (1,2) connectable via a radio circuit with the base unit (3), and means arranged to form an outside line communication channel for any particular one of the telephone sets via the subscriber line by establishing a radio circuit between the base unit and the particular one of the radio telephone set, the radio circuit including a control channel and a communication channel, characterised in that there are provided:
means (3-9) arranged to hold a telephone communication via the subscriber line (3-10) in accordance with a request for hold from a transferring radio telephone set (1) in telephone communication via the outside line, to generate from the transferring telephone set (1) to the base unit (3) a request for transfer to a receiving radio telephone set (2) to release the communication channel between the transferring telephone set and the base station and to place the transferring telephone set (1) on standby after generation of the request for transfer;
means arranged to respond to the request for transfer to establish a radio circuit among the base unit (3), and the transferring and receiving telephone sets (1,2) and to deliver over the control channel a ringing signal from the base unit (3) to the receiving and transferring telephone sets (1,2) simultaneously; and
means arranged to release the hold of the telephone communication via the outside line, to stop the generation of the ringing signal, and to form an outside line communication channel via the subscriber line (3-10) to the receiving telephone set (2) when the receiving telephone set (2) responds to the ringing signal, the release means also being arranged to release the hold of the telephone communication via the outside line, to stop the generation of the ringing signal and to again form the outside line communication channel via the subscriber line (3-10) to the transferring telephone set (1) when the transferring telephone set (1) responds to the ringing signal.

2. A cordless telephone apparatus according to claim 1, characterised in that the radio circuit includes a plurality of communication channels; and
the means arranged to form the outside line communication channel uses the control channel to select a radio telephone set for communication, and uses a selected communication channel to connect the radio telephone set for communication and the base unit.

3. A cordless telephone apparatus according to claim 1 " or 2, characterised in that the means arranged to form an outside line communication channel is arranged to form a communication channel for a particular radio telephone set in response to an incoming call to the particular radio telephone set from the subscriber line (3-10).

4. A cordless telephone apparatus according to any one of claims 1 to 3, characterised in that the means arranged to form an outside communication channel is arranged to form a communication channel for a radio telephone set which has issued a call, in accordance with the call from that radio telephone set.

5. A cordless telephone apparatus according to any one of claims 1 to 4, characterised in that the radio telephone sets (1,2) each includes a hold key (1-9, 2-9); and
the transferring radio telephone set (1) is arranged to generate a request for hold on operation of its hold key (1-9).

6. A cordless telephone apparatus according to any one of claims 1 to 5, characterised in that the radio telephone sets (1,2) each includes an extension key (1-10,2-10); and
the transferring radio telephone set (1) is arranged to generate a request for transfer to the receiving radio telephone set (2) when the extension key (1-10) is actuated and the dial number of the receiving radio telephone set is input.

7. A cordless telephone apparatus according to claim 2, characterised in that the means arranged to deliver a ringing signal is arranged to connect the base unit (3) and the designated transferring and receiving radio telephone sets (1,2) through the same communication channel.

8. A cordless telephone apparatus according to any one of claims 1 to 7, characterised in that the radio telephone sets (1, 2) each includes a ringing tone generating means; and
the transferring and receiving telephone sets (1,2) are responsive to the ringing signal to cause the ringing tone generating means to produce a ringing tone.

9. A cordless telephone apparatus according to any one of claims 1 to 8, characterised in that the ringing tone generated from the transferring telephone set (1) is set so as to be different in tone colour, timing and manner of generation from the receiving telephone set (2).

10. A cordless telephone apparatus according to any one of claims 1 to 7, characterised in that the radio telephone sets (1,2) each includes a ringing tone generating means and a display means (1-12,2-12);
the receiving telephone set (2) is responsive to the ringing signal to cause the ringing tone generating means to generate a ringing tone; and
the transferring telephone set (1) is responsive to the ringing signal to cause the display means (1-12) to display that the incoming call is being transferred.

11. A method of controlling a cordless telephone apparatus including a base unit (3) connected to a subscriber line (3-10) and a plurality of radio telephone sets (1,2) connectable to the base unit (3) via a radio circuit, the radio circuit including a control channel and a communication channel, characterised by the steps of:
operating the transferring radio telephone set (1) to generate a request from the transferring radio telephone set (1) to the base unit (3) to hold an outside line (3-10) through which a transferring radio telephone set (1) of the plurality of radio telephone sets (1, 2) is in telephone communication via the subscriber line (3-10) and to transfer to a receiving radio telephone set (2) from the transferring radio telephone set (1);
holding the outside line communication via the subscriber line (3-10) at the base unit (3) in response to the request to hold, releasing the communication channel between the transferring radio telephone set (1) and the base station and placing the transferring radio telephone set (1) on standby after generation of the request for transfer, and sending over the control channel a ringing signal from the base unit to the transferring and receiving radio telephone sets (1,2) simultaneously in response to the request to transfer;
and releasing the hold of the outside line communication via the subscriber line (3-10) and forming an outside line communication channel via the subscriber line (3-10) to the receiving telephone set (2) if the receiving telephone set (2) responds to the ringing signal; and releasing the hold of the outside line communication via the subscriber line (3-10), and again forming the outside line communication channel to the transferring telephone set (1) if the transferring telephone set (1) responds to the ringing signal.

12. A method of controlling a cordless telephone apparatus according to claim 11, characterised in that the radio telephone sets (1,2) each includes a hold key (1-9, 2-9); and
the transferring radio telephone set generates a request to hold on operation of its hold key (1-9,2-9).

13. A method of controlling a cordless telephone apparatus according to claim 11 or 12, characterised in that the radio telephone sets (1,2) each includes an extension key (1-10,2-10); and
the transferring radio telephone set (1) generates a request for transfer to the receiving radio telephone set (2) when the extension key (1-10) is actuated and the dial number of the receiving radio telephone set is input.

14. A method of controlling a cordless telephone apparatus according to claim 11, 12 or 13, characterised in that the base unit (3) designates a transferring telephone set (1) and a receiving telephone set (2) using the control channel, and connects the base unit (3) and the designated transferring and receiving telephone sets (1,2) through the same communication channel.

15. A method of controlling a cordless telephone apparatus according to any one of claims 11 to 14, characterised in that the transferring and receiving telephone sets(1,2) respond to a ringing signal to generate a ringing tone.

16. A method of controlling a cordless telephone apparatus according to claim 15, characterised in that the ringing tone generated from the transferring telephone set (1) is set so as to be different in tone colour, timing and manner of generation from the receiving telephone set (2) ringing tone.

17. A method of controlling a cordless telephone apparatus according to any one of claims 11 to 14, characterised in that the radio telephone sets (1,2) each include a ringing tone generating means and display means (1-12,2-12);
the receiving telephone set (2) is responsive to the ringing signal to cause the ringing tone generating means to generate a ringing tone; and
the transferring telephone set (1) is responsive to the ringing signal to cause the display means (1-12) to display that the incoming call is being transferred.

## Revendications

1. Dispositif de téléphone sans fil incluant une unité de base (3) connectée à une ligne d'abonné (3-10), une pluralité de postes téléphoniques radio (1, 2) qui peuvent être connectés via une liaison radio à l'unité de base (3) et un moyen agencé pour former un canal de communication de ligne extérieure avec l'un quelconque particulier des postes téléphoniques via la ligne d'abonné en établissant une liaison radio entre l'unité de base et l'un quelconque particulier des postes téléphoniques radio, la liaison radio incluant un canal de commande et un canal de communication, caractérisé en ce que sont prévus:
un moyen (3-9) agencé pour maintenir une communication téléphonique via la ligne d'abonné (3-10) conformément à une requête de maintien en provenance d'un poste téléphonique radio de transfert (1) lors d'une communication téléphonique via la ligne extérieure et pour générer depuis le poste téléphonique de transfert (1) à l'unité de base (3) une requête de transfert destinée à un poste téléphonique radio de réception (2) pour libérer le canal de communication entre le poste téléphonique de transfert et la station de base et pour placer le poste téléphonique de transfert (1) en attente après la génération de la requête de transfert;
un moyen agencé pour répondre à la requête de transfert afin d'établir une liaison radio entre l'unité de base (3) et les postes téléphoniques de transfert et de réception (1, 2) et afin de délivrer simultanément sur le canal de commande un signal de sonnerie depuis l'unité de base (3) aux postes téléphoniques de réception et de transfert (1, 2); et
un moyen agencé pour libérer le maintien de la communication téléphonique via la ligne extérieure, pour arrêter la génération du signal de sonnerie et pour former un canal de communication de ligne extérieure via la ligne d'abonné (3-10) avec le poste téléphonique de réception (2) lorsque le poste téléphonique de réception (2) répond au signal de sonnerie, le moyen de libération étant agencé également pour libérer le maintien de la communication téléphonique via la ligne extérieure, pour arrêter la génération du signal de sonnerie et pour former à nouveau le canal de communication de ligne extérieure via la ligne d'abonné (3-10) avec le poste téléphonique de transfert (1) lorsque le poste téléphonique de transfert (1) répond au signal de sonnerie.

2. Dispositif de téléphone sans fil selon la revendication 1, caractérisé en ce que la liaison radio inclut une pluralité de canaux de communication; et
le moyen agencé pour former le canal de communication de ligne extérieure utilise le canal de commande pour sélectionner un poste téléphonique radio pour la communication et utilise un canal de communication sélectionné pour connecter à l'unité de base le poste téléphonique radio pour la communication.

3. Dispositif de téléphone sans fil selon la revendication 1 ou 2, caractérisé en ce que le moyen agencé pour former un canal de communication de ligne extérieure est agencé pour former un canal de communication avec un poste téléphonique radio particulier en réponse à un appel d'arrivée pour le poste téléphonique radio particulier, en provenance de la ligne d'abonné (3-10).

4. Dispositif de téléphone sans fil selon l'une quelconque des revendications 1 à 3, caractérisé en ce que le moyen agencé pour former un canal de communication extérieure est agencé pour former un canal de communication avec un poste téléphonique radio qui a délivré un appel, en fonction de l'appel provenant de ce poste téléphonique radio.

5. Dispositif de téléphone sans fil selon l'une quelconque des revendications 1 à 4, caractérisé en ce que les postes téléphoniques radio (1, 2) incluent chacun une touche de maintien (1-9, 2-9);
le poste téléphonique radio de transfert (1) est agencé pour générer une requête de maintien du fait de l'actionnement de sa touche de maintien (1-9).

6. Dispositif de téléphone sans fil selon l'une quelconque des revendications 1 à 5, caractérisé en ce que les postes téléphoniques radio (1, 2) incluent chacun une touche de transfert (1-10, 2-10); et
le poste téléphonique radio de transfert (1) est agencé pour générer une requête de transfert sur le poste téléphonique radio de réception (2) lorsque la touche de transfert (1-10) est actionnée et lorsque le numéro d'appel du poste téléphonique radio de réception est composé.

7. Dispositif de téléphone sans fil selon la revendication 2, caractérisé en ce que le moyen agencé pour délivrer un signal de sonnerie est agencé pour connecter l'unité de base (3) et les postes téléphoniques radio de transfert et de réception désignés (1, 2) au travers du même canal de communication.

8. Dispositif de téléphone sans fil selon l'une quelconque des revendications 1 à 7, caractérisé en ce que les postes téléphoniques radio (1, 2) incluent chacun un moyen de génération de timbre de sonnerie; et
les postes téléphoniques de transfert et de réception (1, 2) sont sensibles au signal de sonnerie pour forcer le moyen de génération de timbre de sonnerie à produire un timbre de sonnerie.

9. Dispositif de téléphone sans fil selon l'une quelconque des revendications 1 à 8, caractérisé en ce que le timbre de sonnerie généré à partir du poste téléphonique de transfert (1) est défini de manière à être différent du point de vue du timbre, du cadencement et de son mode de génération de celui du poste téléphonique de réception (2).

10. Dispositif de téléphone sans fil selon l'une quelconque des revendications 1 à 7, caractérisé en ce que les postes téléphoniques radio (1, 2) incluent chacun un moyen de génération de timbre de sonnerie et un moyen d'affichage (1-12, 2-12);
le poste téléphonique de réception (2) est sensible au signal de sonnerie afin de forcer le moyen de génération de timbre de sonnerie à générer un timbre de sonnerie; et
le poste téléphonique de transfert (1) est sensible au signal de sonnerie afin de forcer le moyen d'affichage (1-12) à afficher que l'appel entrant est en cours de transfert.

11. Procédé de commande d'un dispositif de téléphone sans fil incluant une unité de base (3) connectée à une ligne d'abonné (3-10) et une pluralité de postes téléphoniques radio (1, 2) qui peuvent être connectés à l'unité de base (3) via une liaison radio, la liaison radio incluant un canal de commande et un canal de communication, caractérisé par les étapes de :
actionnement du poste téléphonique radio de transfert (1) afin de générer une requête à partir du poste téléphonique radio de transfert (1) pour l'unité de base (3) afin de maintenir une ligne extérieure (3-10) au travers de laquelle un poste téléphonique radio de transfert (1) de la pluralité de postes téléphoniques radio (1-2) est en communication téléphonique via la ligne d'abonné (3-10) et afin d'effectuer un transfert à un poste téléphonique radio de réception (2) à partir du poste téléphonique radio de transfert (1);
le maintien de la communication de ligne extérieure via la ligne d'abonné (3-10) au niveau de l'unité de base (3) en réponse à la requête afin de maintenir la ligne, la libération du canal de communication entre le poste de radiotéléphone de transfert (1) et la station de base et le placement du poste de radiotéléphone de transfert (1) en attente après la génération de la requête de transfert et l'envoi sur le canal de commande et de générer simultanément un signal de sonnerie depuis l'unité de base pour les postes téléphoniques radio de transfert et de réception (1, 2) en réponse à la requête de transfert; et
la libération du maintien de la communication de ligne extérieure via la ligne d'abonné (3-10) et la formation d'un canal de communication de ligne extérieure via la ligne d'abonné (3-10) avec le poste téléphonique de réception (2) si le poste téléphonique de réception (2) répond au signal de sonnerie; et la libération du maintien de la communication de ligne extérieure via la ligne d'abonné (3-10) et à nouveau la formation du canal de communication de ligne extérieure avec le poste téléphonique de transfert (1) si le poste téléphonique de transfert (1) répond au signal de sonnerie.

12. Procédé de commande d'un dispositif de téléphone sans fil selon la revendication 11, caractérisé en ce que les postes téléphoniques radio (1, 2) incluent chacun une touche de maintien (1-9, 2-9); et
le poste téléphonique radio de transfert génère une requête de maintien du fait de l'actionnement de sa touche de maintien (1-9, 2-9).

13. Procédé de commande d'un dispositif de téléphone sans fil selon la revendication 11 ou 12, caractérisé en ce que les postes téléphoniques radio (1, 2) incluent chacun une touche de transfert (1-10, 2-10); et
le poste téléphonique radio de transfert (1) génère une requête de transfert sur le poste téléphonique radio de réception (2) lorsque la touche de transfert (1-10) est actionnée et lorsque le numéro d'appel du poste téléphonique radio de réception est composé.

14. Procédé de commande d'un dispositif de téléphone sans fil selon la revendication 11, 12 ou 13, caractérisé en ce que l'unité de base (3) indique un poste téléphonique de transfert (1) et un poste téléphonique de réception (2) en utilisant le canal de commande, et connecte l'unité de base (3) et les postes téléphoniques de transfert et de réception désignés (1, 2) au travers du même canal de communication.

15. Procédé de commande d'un dispositif de téléphone sans fil selon l'une quelconque des revendications 11 à 14, caractérisé en ce que les postes téléphoniques de transfert et de réception (1, 2) répondent à un signal de sonnerie pour générer un timbre de sonnerie.

16. Procédé de commande d'un dispositif de téléphone sans fil selon la revendication 15, caractérisé en ce que le timbre de sonnerie généré à partir du poste téléphonique de transfert (1) est défini de manière à être différent du point de vue du timbre, du cadencement et de son mode de génération du timbre de sonnerie du poste téléphonique de réception (2).

17. Procédé de commande d'un dispositif de téléphone sans fil selon l'une quelconque des revendications 11 à 14, caractérisé en ce que les postes téléphoniques radio (1, 2) incluent chacun un moyen de génération de timbre de sonnerie et un moyen d'affichage (1-12, 2-12);
le poste téléphonique de réception (2) est sensible au signal de sonnerie afin de forcer le moyen de génération de timbre de sonnerie à générer un timbre de sonnerie; et
le poste téléphonique de transfert (1) est sensible au signal de sonnerie pour forcer le moyen d'affichage (1-12) à afficher que l'appel entrant est en cours de transfert.

## Patentansprüche

1. Drahtlose Telefonanlage aus einem Grundgerät (3), das an eine Teilnehmerleitung (3-10) angeschlossen ist, einer Vielzahl von Funktelefonapparaten (1,2), die über eine Funkverbindung mit dem Grundgerät (3) verbunden werden können, und Mitteln, um eine Außenleitungs-Sprechverbindung für irgendeinen der Telefonapparate über die Teilnehmerleitung herzustellen, wozu eine Funkverbindung zwischen dem Grundgerät und dem betreffenden Funktelefonapparat hergestellt wird, wobei die Funkverbindung einen Steuerkanal und einen Sprechverbindungskanal umfaßt, dadurch gekennzeichnet, daß vorgesehen sind:
Mittel (3-9), um bei einer Halteanforderung von einem umlegenden Funktelefonapparat (1), der über die Außenleitung Sprechverbindung mit einem Teilnehmer-Anschluß hat, eine Telefonverbindung über die Teilnehmerleitung (3-10) zu halten, um von dem umlegenden Telefonapparat (1) eine Umlegungsanforderung zur Umlegung des Gesprächs auf einen empfangenden Funktelefonapparat (2) nach dem Grundgerät (3) zu übermitteln, um den Sprechverbindungskanal zwischen dem umlegenden Telefonapparat und dem Grundgerät freizugeben, und um den umlegenden Telefonapparat (1) nach Übermittlung der Umlegungsanforderung auf Bereitschaft zu schalten;
Mittel, um auf die Umlegungsanforderung zu antworten, und um eine Funkverbindung zwischen dem Grundgerät (3) und dem umlegenden Telefonapparat (1) und dem empfangenden Telefonapparat (2) herzustellen, und um über den Steuerkanal ein Klingelsignal von dem Grundgerät (3) gleichzeitig nach dem empfangenden Telefonapparat (1) und dem umlegenden Telefonapparat (2) zu übermitteln; und
Mittel, um den Haltezustand der Telefonverbindung über die Außenleitung freizugeben, um die Erzeugung des Klingelsignals zu beenden, und um über die Teilnehmerleitung (3-10) eine Außenleitungs-Sprechverbindung nach dem empfangenden Telefonapparat (2) herzustellen, wenn der empfangende Telefonapparat (2) auf das Klingelsignal antwortet, wobei die Freigabemittel auch den Haltezustand der Telefonverbindung über die Außenleitung freigeben, die Erzeugung des Klingelsignals beenden, und wieder die Außenleitungs-Sprechverbindung über die Teilnehmerleitung (3-10) nach dem umlegenden Telefonapparat (1) herstellen, wenn der umlegende Telefonapparat (1) auf das Klingelsignal antwortet.

2. Drahtlose Telefonanlage gemäß Anspruch 1, dadurch gekennzeichnet, daß die Funkverbindung eine Vielzahl von Sprechverbindungskanälen umfaßt; und
das Mittel zur Herstellung der Außenleitungs-Sprechverbindung den Steuerkanal benutzt, um einen Funktelefonapparat für die Sprechverbindung auszuwählen, und einen ausgewählten Sprechverbindungskanal benutzt, um den Funktelefonapparat für die Sprechverbindung mit dem Grundgerät zu verbinden.

3. Drahtlose Telefonanlage gemäß Anspruch 1 oder 2, dadurch gekennzeichnet, daß das Mittel zur Herstellung einer Außenleitungs-Sprechverbindung bei einem über die Teilnehmerleitung (3-10) ankommenden Anruf für einen bestimmten Funktelefonapparat eine Sprechverbindung für diesen bestimmten Funktelefonapparat herstellt.

4. Drahtlose Telefonanlage gemäß irgendeinem der Ansprüche 1 bis 3, dadurch gekennzeichnet, daß das Mittel zur Herstellung einer Außenleitungs-Sprechverbindung bei einem Anruf von einem Funktelefonapparat aus eine Sprechverbindung für den anrufenden Funktelefonapparat herstellt.

5. Drahtlose Telefonanlage gemäß irgendeinem der Ansprüche 1 bis 4, dadurch gekennzeichnet, daß jeder der Funktelefonapparate (1,2) eine Haltetaste (1-9, 2-9) umfaßt; und
der umlegende Funktelefonapparat (1) bei Betätigung seiner Haltetaste (1-9) eine Halteanforderung erzeugt.

6. Drahtlose Telefonanlage gemäß irgendeinem der Ansprüche 1 bis 5, dadurch gekennzeichnet, daß jeder der Funktelefonapparate (1,2) eine Nebenstellentaste (1-10,2-10) umfaßt; und
der umlegende Funktelefonapparat (1) eine Umlegungsanforderung zur Umlegung nach dem empfangenden Funktelefonapparat (2) erzeugt, wenn die Nebenstellentaste (1-10) betätigt wird und die Rufnummer des empfangenden Funktelefonapparats eingegeben wird.

7. Drahtlose Telefonanlage gemäß Anspruch 2, dadurch gekennzeichnet, daß das Mittel zur Übermittlung eines Klingelsignals das Grundgerät (3) über denselben Sprechverbindungskanal mit dem bezeichneten umlegenden Funktelefonapparat (1) und dem bezeichneten empfangenden Funktelefonapparat (2) verbindet.

8. Drahtlose Telefonanlage gemäß irgendeinem der Ansprüche 1 bis 7, dadurch gekennzeichnet, daß jeder der Funktelefonapparate (1,2) ein Klingelzeichen-Erzeugungsmittel umfaßt; und
der umlegende Telefonapparat (1) und der empfangende Telefonapparat (2) auf das Klingelsignal antworten, wobei sie über das Klingelzeichen-Erzeugungsmittel ein Klingelzeichen erzeugen.

9. Drahtlose Telefonanlage gemäß irgendeinem der Ansprüche 1 bis 8, dadurch gekennzeichnet, daß das von dem umlegenden Telefonapparat (1) erzeugte Klingelzeichen hinsichtlich der Klangfarbe, der Zeitsteuerung und der Erzeugungsweise verschieden von dem Klingelzeichen des empfangenden Telefonapparats (2) ist.

10. Drahtlose Telefonanlage gemäß irgendeinem der Ansprüche 1 bis 7, dadurch gekennzeichnet, daß jeder der Funktelefonapparate (1,2) ein Klingelzeichen-Erzeugungsmittel und ein Anzeigemittel (1-12,2-12) umfaßt;
der empfangende Telefonapparat (2) auf das Klingelsignal antwortet, wobei das Klingelzeichen-Erzeugungsmittel ein Klingelzeichen erzeugt; und
der umlegende Telefonapparat (1) auf das Klingelsignal antwortet, wobei das Anzeigemittel (1-12) anzeigt, daß der ankommende Anruf umgelegt wird.

11. Verfahren zur Steuerung einer drahtlosen Telefonanlage aus einem Grundgerät (3), das an eine Teilnehmerleitung (3-10) angeschlossen ist, und einer Vielzahl von Funktelefonapparaten (1,2), die über eine Funkverbindung mit dem Grundgerät (3) verbunden werden können, wobei die Funkverbindung einen Steuerkanal und einen Sprechverbindungskanal umfaßt, dadurch gekennzeichnet, daß:
der umlegende Funktelefonapparat (1) betätigt wird, um eine Anforderung von dem umlegenden Funktelefonapparat (1) nach dem Grundgerät (3) zu übermitteln, damit eine Außenleitung (3-10) gehalten wird, über die ein umlegender Funktelefonapparat (1) aus der Vielzahl von Funktelefonapparaten (1,2) über die Teilnehmerleitung (3-10) telephonische Verbindung mit einem Teilnehmer-Anschluß hat, und damit diese Außenleitung (3-10) von dem umlegenden Funktelefonapparat (1) nach einem empfangenden Funktelefonapparat (2) umgelegt wird;
die Außenleitungs-Sprechverbindung über die Teilnehmerleitung (3-10) bei dem Grundgerät (3) auf die Halteanforderung hin gehalten wird, der Sprechverbindungskanal zwischen dem umlegenden Funktelefonapparat (1) und dem Grundgerät freigegeben wird, und der umlegende Funktelefonapparat (1) nach Übermittlung der Umlegungsanforderung auf Bereitschaft geschaltet wird, und auf die Umlegungsanforderung hin über den Steuerkanal ein Klingelsignal von dem Grundgerät gleichzeitig nach dem umlegenden Funktelefonapparat (1) und dem empfangenden Funktelefonapparat (2) übermittelt wird; und
der Haltezustand der Außenleitungs-Sprechverbindung über die Teilnehmerleitung (3-10) freigegeben wird, und über die Teilnehmerleitung (3-10) eine Außenleitungs-Sprechverbindung nach dem empfangenden Funktelefonapparat (2) hergestellt wird, wenn der empfangende Funktelefonapparat (2) auf das Klingelsignal antwortet; und der Haltezustand der Außenleitungs-Sprechverbindung über die Teilnehmerleitung (3-10) freigegeben wird, und die Außenleitungs-Sprechverbindung nach dem umlegenden Telefonapparat (1) wieder hergestellt wird, wenn der umlegende Telefonapparat (1) auf das Klingelsignal antwortet.

12. Verfahren zur Steuerung einer drahtlosen Telefonanlage, gemäß Anspruch 11, dadurch gekennzeichnet, daß jeder der Funktelefonapparate (1,2) eine Haltetaste (1-9, 2-9) umfaßt; und
der umlegende Funktelefonapparat bei Betätigung seiner Haltetaste (1-9, 2-9) eine Halteanforderung erzeugt.

13. Verfahren zur Steuerung einer drahtlosen Telefonanlage gemäß Anspruch 11 oder 12, dadurch gekennzeichnet, daß jeder der Funktelefonapparate (1,2) eine Nebenstellentaste (1-10,2-10) aufweist; und
der umlegende Funktelefonapparat (1) eine Umlegungsanforderung zur Umlegung des Gesprächs nach dem empfangenden Funktelefonapparat (2) erzeugt, wenn die Nebenstellentaste (1-10) gedrückt wird und die Rufnummer des empfangenden Funktelefonapparats eingegeben wird.

14. Verfahren zur Steuerung einer drahtlosen Telefonanlage, gemäß Anspruch 11, 12 oder 13, dadurch gekennzeichnet, daß das Grundgerät (3) über den Steuerkanal einen umlegenden Telefonapparat (1) und einen empfangenden Telefonapparat (2) bezeichnet, und über denselben Sprechverbindungskanal das Grundgerät (3) mit dem bezeichneten umlegenden Telefonapparat (1) und dem bezeichneten empfangenden Telefonapparat (2) verbindet.

15. Verfahren zur Steuerung einer drahtlosen Telefonanlage gemäß irgendeinem der Ansprüche 11 bis 14, dadurch gekennzeichnet, daß der umlegende Telefonapparat (1) und der empfangende Telefonapparat (2) auf ein Klingelsignal hin ein Klingelzeichen erzeugen.

16. Verfahren zur Steuerung einer drahtlosen Telefonanlage gemäß Anspruch 15, dadurch gekennzeichnet, daß das von dem umlegenden Telefonapparat (1) erzeugte Klingelzeichen hinsichtlich der Klangfarbe, der Zeitsteuerung und der Erzeugungsart verschieden von dem Klingelzeichen des empfangenden Telefonapparats (2) ist.

17. Verfahren zur Steuerung einer drahtlosen Telefonanlage gemäß irgendeinem der Ansprüche 11 bis 14, dadurch gekennzeichnet, daß jeder der Funktelefonapparate (1,2) ein Klingelzeichen-Erzeugungsmittel und ein Anzeigemittel (1-12, 2-12) umfaßt;
der empfangende Telefonapparat (2) auf das Klingelsignal hin mittels des Klingelzeichen-Erzeugungsmittel ein Klingelzeichen erzeugt; und
der umlegende Telefonapparat (1) auf das Klingelsignal hin mittels des Anzeigemittels (1-12) anzeigt, daß der ankommende Anruf umgelegt wird.
